# EUROPEAN PATENT SPECIFICATION

(11) **EP 0 589 724 B1**
(45) Date of publication and mention of the grant of the patent: **10.05.2000**
(21) Application number: 93307604.4
(22) Date of filing: 24.09.1993
(51) Int. Cl.: G06T 1/20

(54) **An electronic image processing system and method**
Elektronisches Bildverarbeitungssystem und -methode
Système et méthode électronique de traitement d'images

(30) Priority: 25.09.1992 GB 9220266
(43) Date of publication of application: 30.03.1994
(73) Proprietor: QUANTEL LIMITED, Newbury Berkshire RG14 2LT (GB)
(72) Inventor: Searby, Anthony David, Newbury, Berkshire (GB); Ingram, Martin Stewart, Winchester, Hampshire SO23 8JZ (GB)
(74) Representative: Whitten, George Alan

(56) References cited:
- EP-A- 0 423 930
- EP-A- 0 449 618
- GB-A- 2 137 856
- US-A- 5 131 080

## Description

The invention relates to an electronic image processing system and method more particularly, but not exclusively, the invention relates to a system for and method of modifying initial image data to produce data representing a modified image.

Electronic image processing systems are known for modifying an initial image to produce a modified image having a different shape, size and/or position as compared to that of the initial image. For example, our British patent application published as GB-A-2,113,950, and corresponding US patent US-A-4,602,286, both disclose a system for performing picture composition. Our British patent application published as GB-A-2,119,594, and corresponding US patent US-A-4,563,703, both disclose a system for producing effects by writing input video signals received in raster order to a store in such an order that the shape, size and/or position of the image is altered. Also, our British patent application published as GB-A-2,158,671 discloses a system in which picture data is modified using three-dimensional transformations so that the shape, size and/or position of the image appears to undergo a corresponding change in three dimensional space. Once modified, the three-dimensional signals are converted into two-dimensional signals which represent the image as it would appear if projected onto a viewing screen thereby producing a perspective effect in the modified image. A similar perspective manipulation is disclosed in our European patent application published as EP-A-283,158 and corresponding US patent US-A-4,951,040.

The systems disclosed in the above mentioned patent specifications are directed to the modification of image data at television resolution up to high definition standards e.g. 1250 lines at 50Hz. As the size or resolution of an image increases there is a corresponding increase in the amount of data that has to be modified in order to achieve a given effect. There is also a corresponding increase in the amount of time taken to process the data, and when manipulating print-quality pictures comprising say 8000 x 10000 picture points the delay is noticeable and unacceptable to the user of the system.

Where there is a change in the perspective of the image, the transformations to be applied to the image data will vary along the height and/or width of the image in order to achieve the effect of foreshortening associated with perspective views. The need to vary the transformations applied to image elements between one element and the next introduces a further level of complexity to the system.

US-A-5131080 describes a graphics frame buffer with RGB pixel cache, which system uses a programmable file size shape supported by a frame buffer memory organisation wherein (X, Y) pixel addresses map into regularly offset permutations on groups of RAM addresses and data line assignments.

EP-A-423930 describes an electronic graphic system using a low resolution control image, which system is suitable for use in modifying data defining an initial high resolution image.

According to one aspect of the invention there is provided an electronic image processing system for producing data representing a modified form of an image from data representing an initial image, the system comprising: a source store for storing data representing an initial image; a destination store for storing data representing a modified image derived from the initial image, the data in the source and destination stores being accessible as data sequences in random sequence order; a small capacity random access cache store for storing initial image data representing a portion of the initial image comprising plural data sequences from the source store; a filter for effecting transformations to the data in the cache store to create modified image data representing a modified portion of the image for storage as plural data sequences comprising a portion of the modified image data in the destination store; and a processor for determining the transformations to be effected by the filter, for identifying in the source store the initial image data sequences that together define the initial image portion by determining an area in the modified form of the image that will be represented by data produced by manipulating an amount of initial image data not greater than the capacity of the cache store, and for controlling the transfer of data sequences comprising the initial image portion from the source store to the cache store and from the filter to the destination store.

According to another aspect of the invention there is provided a method of producing data representing a modified form of an image from data representing an initial image, the method comprising: storing in a source store data representing an initial image; storing in a destination store data representing a modified image derived from the initial image, the stored data being accessible as data sequences in random sequence order; storing in a small capacity random access cache store initial image data representing a portion of the initial image comprising plural data sequences from the source store; effecting transformations to the data in the cache store by way of a filter to create modified image data representing a modified portion of the image for storage as plural data sequences comprising a portion of the modified image data in the destination store; determining the transformations to be effected by the filter; identifying in the source store the initial image data sequences that together define the initial image portion by determining an area in the modified form of the image that will be represented by data produced by manipulating an amount of initial image data not greater than the capacity of the cache store; and controlling the transfer of data sequences comprising the initial image portion from the source store to the cache store and from the filter to the destination store.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 is a schematic diagram of an electronic image processing system;
Figure 2 is a schematic diagram showing data layout in a store; and
Figure 3 shows schematic views representing a stored image.

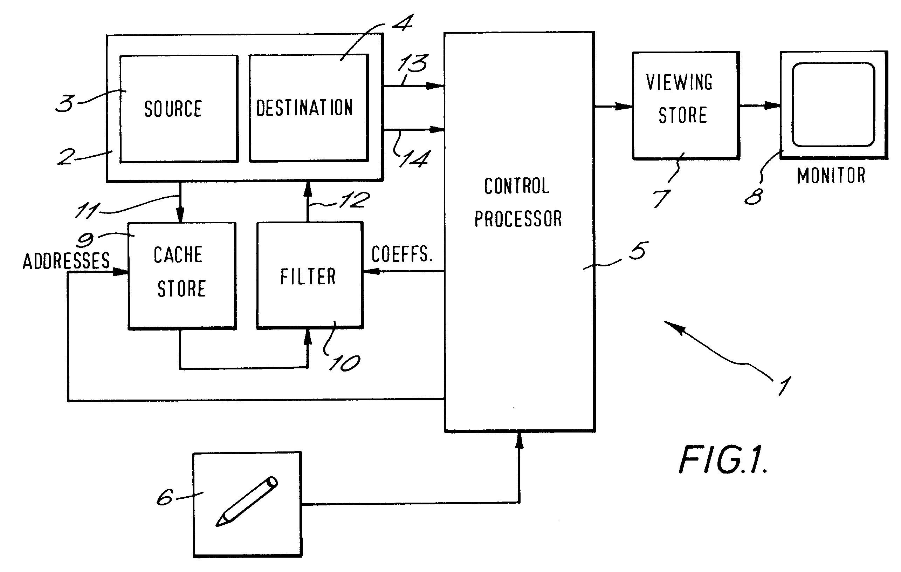

Turning now to Figure 1 of the accompanying drawings, an electronic image processing system 1 comprises a store 2. The store 2 is a high capacity store capable of storing at least two large or high resolution images. Our co-pending British Patent Application No. 9215949, published as GB-A-2269291, discloses a high capacity store which is well suited to storing at least two high resolution images. Typically a large or high resolution image, referred to hereinafter simply as a high resolution image, will be an image comprising of the order of 8000 x 10000 picture elements. The system 1 also comprises a bulk store (not shown) for the off-line storage of image data which has been or is to be modified by the system, which bulk store is connected to the store 2.

The store comprises two storing areas identified respectively as a source area 3 and a destination area 4. These two storing areas are entirely independent and indeed can be built as separate source and destination stores which are controlled independently from each other. However, explanation of the system is simplified if the store 2 is regarded as a single unit of the system. The configuration shown in Figure 1 is preferred over an arrangement comprising two separate stores because in practice it is simpler to build than a two store system.

It will be appreciated by those possessed of the appropriate skills that the terms "source" and "destination" are merely used herein for the sake of convenience to distinguish between the area of the store 2 used to hold data representing an unmodified image (the source area) and the area of the store 2 to which is written modified data representing the modified image (the destination area). The store 2 is built from dynamic random access memory devices (DRAMs) which provide a large storage capacity at relatively low cost, but which are relatively slow in the transfer of data thereto and therefrom. Even relatively fast (and correspondingly expensive) DRAM devices currently available have a cycle time of some 120-140nS.

However, there is no need to use these expensive fast DRAM devices in the system 1 shown in Figure 1, and much slower and cheaper DRAMs can be used.

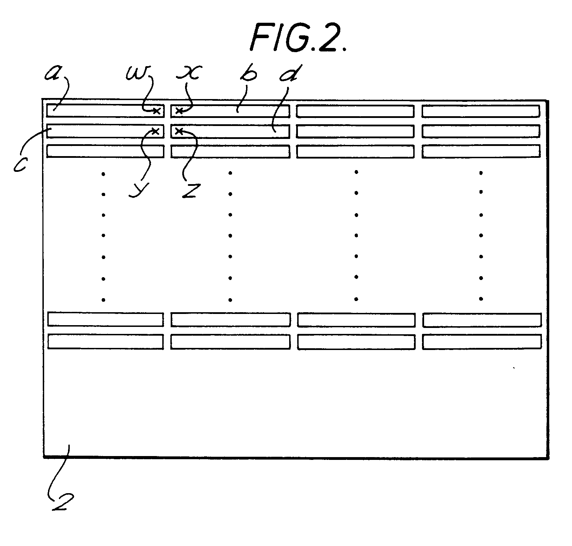

In order to speed up the access time, the DRAM store 2 is arranged such that groups of storage locations within the store are accessed together. As shown in Figure 2 of the accompanying drawings, locations within the store are divided into horizontal groups (referred to herein as "hosepipes") a, b, c, d. A hosepipe of data is read in a single read cycle from the store 2 and thus the picture elements in the hosepipe are effectively read simultaneously from respective locations in the source area 3 of the store 2. As will be appreciated by those possessed of the appropriate skills, to this end the store comprises control circuitry including multiplexers (not shown) similar to that described in our abovementioned copending British Patent Application No. 9215949. The use of hosepipes to increase the speed at which data is read from a store is in itself well known. The amount of data in each hosepipe depends on the structure of the store control circuitry and its ability to multiplex data in the hosepipes onto output lines from the store. Preferably, in the system 1 a hosepipe will contain data relating to 128 picture elements read from horizontally adjacent locations in the store 2. The use of hosepipes of this size gives the potential to increase the speed at which picture element data is read from the store by an order of 128. However, this kind of access time can only be approached when the destination for the required data is well suited to receiving data in large horizontal blocks. For example, a raster scan display builds up a displayed image as a series of horizontal lines and therefore is well suited to receiving data as a series of hosepipes.

It should be noted that the approach of using hosepipes does not always result in an increase in speed. A disadvantage of using hosepipes is that the store loses flexibility because it is no longer a truly random access device. Each hosepipe is a sequence of pixels and regardless of how few pixels are required, whole hosepipes nevertheless have to be accessed. Thus, for example, where data for four pixels w, x, y, z as shown in Figure 2 are required and each pixel is in a different hosepipe e, f, g, h it is necessary to read four hosepipes of data, i.e. data for 512 pixels, in order to access the required four pixels.

In use the source area 3 contains data representing an image to be modified and the destination area 4 contains data representing the image once modified. Data is modified by a control processor 5 in accordance with transformation parameters, such as those disclosed in the above mentioned EP-A-283,159. To this end the control processor 5 is responsive to a stylus and touch tablet device 6. The system also comprises a viewing store 7 for storing data representing an image to be displayed and a monitor 8 for displaying the image. The monitor 8 is preferably able to display images to an HDTV standard, for example 1250 lines, and the viewing store 7 comprises sufficient storage locations for at least one frame of image data.

The system is arranged so that the image displayed on the monitor 8 can be derived from data held in either the source store area 3 or the destination store area 4. The displayed image may be a portion of the image represented by the data in say the source 3, or the displayed image may be a version of the whole image in say the destination 4 down-converted from the high resolution of the destination 4 (8000 x 10000 picture elements) to the relatively low resolution of the monitor 8 (approximately 1250 x 2000 picture elements) or, of course, it may be a portion of the high resolution image down-converted by a suitable factor for display on the monitor 8.

The system 1 is arranged to operate in a preview mode during which the user may experiment with transformations of the image without committing to a given transformation until he is satisfied with the effect. In this preview mode image data from the source 3 is down converted as appropriate, transformed with the parameters defined at that moment in time by the users manipulation of the stylus and touch tablet, and the transformed data written to the destination area of the source store 2 for output to the viewing store 7. The down-conversion of the data, which is itself well known, is performed by the control processor 5 as data is transferred from the source store 2 to the viewing store 7. The viewing store 7 is updated regularly with data for display of the transformed image on the monitor 8. Thus, in response to user manipulations of the stylus and touch tablet device 6 an image which changes in accordance with the manipulations is displayed on the monitor 8. Display data is derived from the image data in the source 3 substantially in real time so that the user can see immediately the effect of his manipulations on the image. This enables the user to try different effects before committing to a particular transformation. Once the user is satisfied with an effect it is selected thereby causing the system to modify the high resolution image from the source store area 3 and to store the thus modified high resolution image data in the destination store area 4.

A cache store 9 receives data from the source 3 under the control of the control processor 5. It should be noted that the control processor 5 controls operation of the system 1 as a whole but that for the sake of clarity only some control lines are shown connecting the control processor to other units in the system 1. The cache store 9 is built from static RAM (SRAM) devices which provide for a relatively fast transfer of data thereto and therefrom. Typically, SRAMs have an access time 20-30nS which is five or six times faster than the access time of the faster DRAMs currently available. The cost of SRAM devices is relatively high and therefore the cache store 9 is considerably smaller than the store 2 in order to keep down costs. Typically, the cache store 9 comprises 128 x 256 storage locations and, thus, the cache store 9 can be filled with 256 hosepipes of data from the store 2. This means that the cache store 9 can be filled relatively quickly with data from the store 2 and once the data is in the cache store 9 it is accessible extremely quickly in a truly random order.

It will be appreciated by those possessed of the appropriate skills that the combination of a large DRAM-based store together with a small SRAM-based cache store provides a cost-effective high capacity store configuration in which data corresponding to small image areas can be accessed extremely quickly with data corresponding to individual picture elements being randomly accessible. Since image transformation requires high speed random access to individual picture elements in small image areas in order to effect the necessary transformations, this kind of store configuration is well suited to supplying data for image transformation at a speed suitable for real time display at high definition display rates.

The system further comprises a filter 10 which effects spatial transforms to the image data in the cache store 9 and writes the thus transformed data to the destination 4 thereby effecting the user selected manipulation to the image. Both the cache store 9 and the filter 10 are controlled by the control processor 5 in response to user manipulations of the stylus and touch tablet device 6. The control processor responds to such manipulations by calculating addresses in the cache store 9 at which are stored data representing pixels to be transformed and calculating for each pixel the transformation coefficients which are output to the filter 10. The use of a filter 10 separate to the control processor 5 facilitates the processing of data during transforms involving a change of perspective by freeing the processor 5 to calculate the next set of transformation parameters to be used while the filter is applying the present set of transformation parameters, to selected source image elements in order to determine a destination image element.

It should be apparent from the foregoing description that the store 2 is a multi-port device comprising at least one port 11 for reading data therefrom for the cache store 9, one port 12 for writing data thereto from the filter 10 and one port 13 for transferring data to the viewing store 7. In practice, the high data rates demanded by the HDTV monitor 8 are satisfied by providing a second video port 14 for transferring optionally data of the initial image or the modified image to the viewing store 7. Thus, the store 2 comprises four ports each requiring access to the data therein. Access through the ports 11 to 14 to the store 2 is arranged to occur on a cyclic basis with port 11 having access during a first time period, video port 13 having access during a second time period, port 12 having access during a third time period, and video port 14 having access during a fourth time period. In other words video access is interleaved in time with the reading and writing of data from and to the store 2. Clearly, this further increases, by a factor of four, the time taken to read data from the store 2 or to write modified data back to the store 2. Accessing data in the store 2 therefore takes about 500nS, a relatively slow process. However, this reduction in speed is more than compensated for by the random access cache store 9 which enables a batch of e.g. 128 x 256 image pixels to be held for random access processing between times when port 11 has access to the store 2.

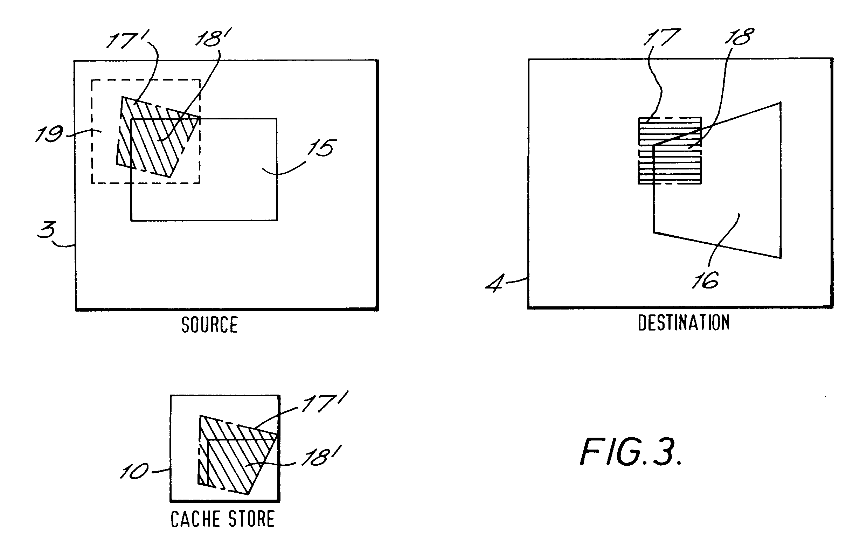

Image data processing is performed by the system 1 in so-called read-side transformations, that is to say image data is read from a source (in this case the cache store) in random order and modified to create data representing a transformed image which is stored at a destination in raster scan order. (In contrast, in a write-side transformation data is read from a source (i.e. the cache store) in raster scan order and written to a destination in random order). The manner in which image data processing is performed will be described with reference to Figure 3 of the accompanying drawings.

Referring to Figure 3, data representing an initial image 15 is held in the source 3. As the stylus and touch tablet device 6 is manipulated the control processor calculates transformation parameters to be applied to the data representing the initial image 15 in order to derive therefrom data representing a transformed image 16. Once derived, the data representing the transformed image 16 is held in the destination store 4.

Once the size, shape and position of the transformed image 16 in the destination 4 has been calculated (as described in EP-A-283,159) it is a simple matter to determine how an area of the transformed image 16 would appear if mapped back into the source store 3. Use is made of this to identify groups of pixel data to be transferred from the source area 3 of the store 2 to the cache store 9 in order to optimise the deriving of the transformed image data. An area 17 is identified in the destination 4 and is mapped into a corresponding area 17' in the source 3. The area 17 is selected by trying different sized areas in the destination 4 until one is found that contains at least part 18 of the transformed image 16 and which when mapped into the source store 2 defines a corresponding area 17' which is smaller than an area 19 in the source 3 corresponding to the size of the cache store 9. The corresponding area 17' contains an area 18' of initial image data corresponding to the part 18 in the transformed image 16. Once the area 17' of data in the source 3 has been identified it is transferred to the cache store 9.

As mentioned hereinabove the system performs read side processing and, thus, the data in the cache store 9 is accessed randomly to enable the filter to produce consecutive adjacent picture elements for the destination area 4. Each picture element in the destination is formed from contributions from at least one and usually many picture elements in the source. Accordingly, several picture elements are read from the cache store to the filter 10 where they are combined for example in a weighted summation based on transformation data determined by the control processor 5 to produce a single transformed picture element (pixel) which is stored at the destination area 4 of the store 2. The process is repeated on a pixel-by-pixel basis until all pixels in the area 17 of the transformed image have been produced and stored in the destination area 4.

Calculating the transformation data on a pixel-by-pixel basis provides for a flexible system and enables more complex transformations to be performed thereby. For example, perspective foreshortening is readily effected by such a system. Whilst the transformations are being applied by the filter to the data in the area 17' the control processor 5 calculates the next area of the initial image 15 to be transferred to the cache store 9. The process is repeated until the data for the complete modified image 16 has been calculated and stored in the destination area 4 of the store 2.

The DRAM store 2 is an inherently slow device made slower by the need to interleave video, read and write cycles. The use of hosepipes can increase the speed at which data in the store is accessed in the case where a large number of horizontally adjacent locations are involved but this approach reduces the flexibility in accessing the store. Even using a fast DRAM it would take about 500nS to read a hosepipe of pixels from the source store.

The use of a fast cache store 9 together with a filter 10 significantly increases the speed at which data representing a transformed image can be created. Once the data for pixels in area 17' has been transferred from the source to the cache store each new pixel in the cache can be accessed in about 20-30nS and this significantly increases the rate at which data representing the transformed image is created. Access to the cache store is not interleaved and the cache store is formed from SRAM which is inherently faster than DRAM.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims.

## Claims

1. An electronic image processing system for producing data representing a modified form of an image from data representing an initial image, the system comprising:
a source store (2, 3) for storing data representing an initial image;
a destination store (2, 4) for storing data representing a modified image derived from the initial image, the data in the source and destination stores being accessible as data sequences in random sequence order;
a small capacity random access cache store (9) for storing initial image data representing a portion of the initial image comprising plural data sequences from the source store (2, 3);
a filter (10) for effecting transformations to the data in the cache store (9) to create modified image data representing a modified portion of the image for storage as plural data sequences comprising a portion of the modified image data in the destination store; and
a processor (5) for determining the transformations to be effected by the filter (10), for identifying in the source store (2, 3) the initial image data sequences that together define the initial image portion by determining an area in the modified form of the image that will be represented by data produced by manipulating an amount of initial image data not greater than the capacity of the cache store (9), and for controlling the transfer of data sequences comprising the initial image portion from the source store (2, 3) to the cache store (9) and from the filter (10) to the destination store (2, 4).

2. A system as claimed in claim 1, wherein the source store (3) and the destination store (4) are formed as separate areas of a single large capacity store (2).

3. A system as claimed in claim 2, wherein the large capacity store (2) comprises dynamic random access memory devices and the cache store (9) comprises static random access memory devices.

4. A system as claimed in claim 1 or 2 or 3, wherein the processor (5) is arranged to derive transformation parameters for use by the filter (10).

5. A system as claimed in claim 4, wherein the processor (5) is arranged to derive addresses in the source store (2, 3) at which data representing the selected portion is stored and in the destination store (2, 4) at which data representing the modified portion is stored.

6. A system as claimed in any preceding claim, further comprising a viewing store (7) for storing data representing an image to be displayed, which data is derived by the processor (5) from data in the source store (2, 3) or in the destination store (2, 4).

7. A system as claimed in claim 6, further comprising a monitor (8) for displaying the image represented by the data in the viewing store.

8. A system as claimed in any preceding claim, further comprising a user operable input device (6), the processor (5) deriving said transformation parameters in response to user manipulations of said input device.

9. A system as claimed in claim 8, wherein said user operable input device comprises a stylus and touch tablet device (6).

10. A system as claimed in claim 8 or 9, wherein the processor (5) is arranged to update continually the viewing store (7) with data representing the initial image as modified in accordance with transformation parameters derived in response to said user operable input device (6).

11. A method of producing data representing a modified form of an image from data representing an initial image, the method comprising:
storing in a source store data representing an initial image;
storing in a destination store data representing a modified image derived from the initial image, the stored data being accessible as data sequences in random sequence order;
storing in a small capacity random access cache store initial image data representing a portion of the initial image comprising plural data sequences from the source store;
effecting transformations to the data in the cache store by way of a filter to create modified image data representing a modified portion of the image for storage as plural data sequences comprising a portion of the modified image data in the destination store;
determining the transformations to be effected by the filter;
identifying in the source store the initial image data sequences that together define the initial image portion by determining an area in the modified form of the image that will be represented by data produced by manipulating an amount of initial image data not greater than the capacity of the cache store; and
controlling the transfer of data sequences comprising the initial image portion from the source store to the cache store and from the filter to the destination store.

12. A method as claimed in claim 11, wherein the initial image data is held in a source store and the transformed image data is held in a destination store.

13. A method as claimed in claim 11 or 12, wherein each of said sequences correspond to at least a portion of a horizontal line in the image.

14. A method as claimed in any of claims 11 to 13, wherein a representation of the image is displayed on a monitor and said transformation parameters are derived in response to modifications effected to the displayed image.

15. A method as claimed in claim 14, wherein the displayed image is continually updated as modifications are effected thereto, thereby to enable the effect of modifications on the displayed image to be seen substantially in real time.

## Patentansprüche

1. Elektronisches Bildverarbeitungssystem zum Erzeugen von Daten, die eine modifizierte Form eines Bilds repräsentieren, aus Daten, die ein Ausgangsbild repräsentieren, wobei das System umfaßt:
einen Quellenspeicher (2, 3) zum Speichern von Daten, die ein Ausgangsbild repräsentieren;
einen Zielspeicher (2, 4) zum Speichern von Daten, die ein modifiziertes, von dem Ausgangsbild abgeleitetes Bild repräsentieren, wobei die Daten in dem Quellenspeicher und dem Zielspeicher als Datensequenzen in wahlfreier Sequenzfolge zugänglich sind;
einen Cachespeicher (9) mit kleiner Kapazität und wahlfreiem Zugriff zum Speichern von Ausgangsbilddaten, die einen Teil des Ausgangsbilds repräsentieren und mehrere Datensequenzen von dem Quellenspeicher (2, 3) umfassen;
einen Filter (10) zum Durchführen von Transformationen an den Daten in dem Cachespeicher (9), um modifizierte Bilddaten zu erzeugen, die einen modifizierten Teil des Bilds repräsentieren, für eine Speicherung als mehrere Datensequenzen umfassend einen Teil der modifizierten Bilddaten in dem Zielspeicher; und
einen Prozessor (5) zum Bestimmen der durch den Filter (10) durchzuführenden Transformationen, zum Identifizieren in dem Quellenspeicher (2, 3) derjenigen Ausgangsbilddatensequenzen, die zusammen den Ausgangsbildteil definieren, durch Bestimmen eines Bereichs in der modifizierten Form des Bilds, der durch Daten repräsentiert wird, die durch ein Manipulieren einer Menge von Ausgangsbilddaten erzeugt werden, die nicht größer als die Kapazität des Cachespeichers (9) ist, und zum Steuern der Übertragung von Datensequenzen umfassend den Ausgangsbildteil von dem Quellenspeicher (2, 3) zu dem Cachespeicher (9) und von dem Filter (10) zu dem Zielspeicher (2, 4).

2. System nach Anspruch 1, wobei der Quellenspeicher (3) und der Zielspeicher (4) als separate Bereiche eines einzigen Speichers (2) hoher Kapazität gebildet sind.

3. System nach Anspruch 2, wobei der Speicher (2) hoher Kapazität dynamische Speichereinrichtungen mit wahlfreiem Zugriff umfaßt und der Cachespeicher (9) statische Speichereinrichtungen mit wahlfreiem Zugriff umfaßt.

4. System nach Anspruch 1 oder 2 oder 3, wobei der Prozessor (5) dazu ausgebildet ist, Transformationsparameter zur Verwendung durch den Filter (10) abzuleiten.

5. System nach Anspruch 4, wobei der Prozessor (5) dazu ausgebildet ist, Adressen abzuleiten in dem Quellenspeicher (2, 3), an denen Daten gespeichert sind, die den gewählten Teil repräsentieren, und in dem Zielspeicher (2, 4), an denen Daten gespeichert sind, die den modifizierten Teil repräsentieren.

6. System nach einem der vorangehenden Ansprüche, ferner umfassend einen Anzeigespeicher (7) zum Speichern von Daten, die ein anzuzeigendes Bild repräsentieren, welche Daten durch den Prozessor (5) aus den Daten in dem Quellenspeicher (2, 3) oder in dem Zielspeicher (2, 4) abgeleitet sind.

7. System nach Anspruch 6, ferner umfassend einen Monitor (8) zum Anzeigen des Bilds, das durch die Daten in dem Anzeigespeicher repräsentiert wird.

8. System nach einem der vorangehenden Ansprüche, ferner umfassend eine durch einen Benutzer bedienbare Eingabeeinrichtung (6), wobei der Prozessor (5) die Transformationsparameter in Reaktion auf die Manipulationen der Eingabeeinrichtung des Benutzers ableitet.

9. System nach Anspruch 8, wobei die von einem Benutzer bedienbare Eingabeeinrichtung eine Stylus/Sensortablett-Einrichtung (6) umfaßt.

10. System nach Ansrpuch 8 oder 9, wobei der Prozessor (5) dazu ausgebildet ist, kontinuierlich den Anzeigespeicher (7) mit Daten zu aktualisieren, die das Ausgangsbild repräsentieren, wie es entsprechend den in Reaktion auf die durch einen Benutzer bedienbare Eingabeeinrichtung (6) abgeleiteten Transformationsparametern modifiziert ist.

11. Verfahren zum Erzeugen von Daten, die eine modifizierte Form eines Bilds repräsentieren, aus Daten, die ein Ausgangsbild repräsentieren, wobei das Verfahren umfaßt:
Speichern von Daten in einem Quellenspeicher, die ein Ausgangsbild repräsentieren;
Speichern von Daten in einem Zielspeicher, die ein aus dem Ausgangsbild abgeleitetes modifiziertes Bild repräsentieren, wobei die gespeicherten Daten als Datensequenzen in wahlfreier Sequenzfolge zugänglich sind;
Speichern von Ausgangsbilddaten in einem Cachespeicher kleiner Kapazität mit wahlfreiem Zugriff, die einen Teil des Ausgangsbilds repräsentieren und mehrere Datensequenzen von dem Quellenspeicher umfassen;
Durchführen von Transformationen an den Daten in dem Cachespeicher mittels eines Filters, um modifizierte Bilddaten zu erzeugen, die einen modifizierten Teil des Bilds repräsentieren, für eine Speicherung als mehrere Datensequenzen umfassend einen Teil der modifizierten Bilddaten in dem Zielspeicher;
Bestimmen der Transformationen, die durch den Filter durchzuführen sind;
Identifizieren in dem Quellenspeicher der Ausgangsbilddatensequenzen, die zusammen den Ausgangsbildteil definieren, durch Bestimmen eines Bereichs in der modifizierten Form des Bilds, der durch Daten repräsentiert wird, die durch Manipulieren einer Menge von Ausgangsbilddaten erzeugt werden, die nicht größer als die Kapazität des Cachespeichers ist; und
Steuern der Übertragung von Datensequenzen umfassend den Ausgangsbildteil von dem Quellenspeicher zu dem Cachespeicher und von dem Filter zu dem Zielspeicher.

12. Verfahren nach Anspruch 11, wobei die Ausgangsbilddaten in einem Quellenspeicher gespeichert werden und die transformierten Bilddaten in einem Zielspeicher gespeichert werden.

13. Verfahren nach Anspruch 11 oder 12, wobei jede der Sequenzen wenigstens einem Teil einer horizontalen Zeile in dem Bild entspricht.

14. Verfahren nach einem der Ansprüche 11 bis 13, wobei eine Repräsentation des Bilds auf einem Monitor angezeigt wird und die Transformationsparameter in Reaktion auf Modifikationen abgeleitet werden, die an dem angezeigten Bild durchgeführt werden.

15. Verfahren nach Anspruch 14, wobei das angezeigte Bild kontinuierlich aktualisiert wird, wenn Modifikationen daran durchgeführt werden, wodurch es ermöglicht wird, den Effekt von Modifikationen an dem angezeigten Bild im wesentlichen in Echtzeit zu betrachten.

## Revendications

1. Système électronique de traitement d'image pour produire des données représentant une forme modifiée d'une image à partir de données représentant une image initiale, le système comprenant :
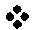 une mémoire source (2, 3) pour stocker des données représentant une image initiale ;
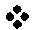 une mémoire destination (2, 4) pour stocker des données représentant une image modifiée dérivée de l'image initiale, les données dans les mémoires source et destination étant accessibles en tant que séquences de données dans un ordre de séquence aléatoire ;
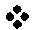 une antémémoire à accès aléatoire de faible capacité (9) pour stocker des données d'image initiale représentant une portion de l'image initiale comprenant plusieurs séquences de données provenant de la mémoire source (2, 3) ;
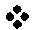 un filtre (10) pour effectuer des transformations aux données dans l'antémémoire (9) pour créer des données d'image modifiée représentant une portion modifiée de l'image pour stockage sous la forme de plusieurs séquences de données comprenant une portion des données d'image modifiée dans la mémoire destination ; et
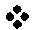 un processeur (5) pour déterminer les transformations à effectuer par le filtre (10), pour identifier dans la mémoire source (2, 3) les séquences de données d'image initiale qui définissent ensemble la portion d'image initiale en déterminant une zone dans la forme modifiée de l'image qui sera représentée par des données produites en manipulant une certaine quantité de données d'image initiale qui n'est pas supérieure à la capacité de l'antémémoire (9) et pour contrôler le transfert des séquences de données comprenant la portion d'image initiale de la mémoire source (2, 3) vers l'antémémoire (9) et du filtre (10) vers la mémoire destination (2, 4).

2. Système selon la revendication 1, dans lequel la mémoire source (3) et la mémoire destination (4) sont formées par des zones séparées d'une simple mémoire à grande capacité (2).

3. Système selon la revendication 2, dans lequel la mémoire de grande capacité (2) comprend des dispositifs de mémoire dynamique à accès aléatoire et l'antémémoire (9) comprend des dispositifs de mémoire statique à accès aléatoire.

4. Système selon la revendication 1, 2 ou 3, dans lequel le processeur (5) est agencé de manière à déterminer des paramètres de transformation destinés à être utilisés par le filtre (10).

5. Système selon la revendication 4, dans lequel le processeur (5) est agencé pour déterminer des adresses dans la mémoire source (2, 3) auxquelles des données représentant la portion sélectionnée sont stockées et dans la mémoire destination (2, 4) auxquelles des données représentant la portion modifiée sont stockées.

6. Système selon l'une quelconque des revendications précédentes, comprenant en outre une mémoire de visualisation (7) pour stocker des données représentant une image destinée à être affichée, ces données étant déterminées par le processeur (5) d'après des données situées dans la mémoire source (2, 3) ou dans la mémoire destination (2, 4).

7. Système selon la revendication 6, comprenant en outre un moniteur (8) pour afficher l'image représentée par les données situées dans la mémoire de visualisation.

8. Système selon l'une quelconque des revendications précédentes, comprenant en outre un dispositif d'entrée pouvant être actionné par un utilisateur (6), le processeur (5) déterminant lesdits paramètres de transformation en réponse à des manipulations par l'utilisateur dudit dispositif d'entrée.

9. Système selon la revendication 8, dans lequel ledit dispositif d'entrée pouvant être actionné par un utilisateur comprend un dispositif à stylet et tablette à contact (6).

10. Système selon la revendication 8 ou 9, dans lequel le processeur (5) est agencé de manière à mettre à jour en continu la mémoire de visualisation (7) avec des données représentant l'image initiale telle qu'elle est modifiée en fonction des paramètres de transformation déterminés en réponse audit dispositif d'entrée pouvant être actionné par l'utilisateur (6).

11. Procédé pour produire des données représentant une forme modifiée d'une image à partir de données représentant une image initiale, le procédé comprenant :
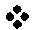 le stockage dans une mémoire source des données représentant une image initiale ;
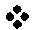 le stockage dans une mémoire destination des données représentant une image modifiée dérivée de l'image initiale, les données stockées étant accessibles en tant que séquences de données dans un ordre de séquence aléatoire ;
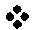 le stockage dans une antémémoire à accès aléatoire de faible capacité des données d'image initiale représentant une portion de l'image initiale comprenant plusieurs séquences de données provenant de la mémoire source ;
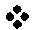 l'exécution de transformations aux données dans l'antémémoire au moyen d'un filtre pour créer des données d'image modifiée représentant une portion modifiée de l'image pour stockage sous la forme de plusieurs séquences de données comprenant une portion des données d'image modifiée dans la mémoire destination ;
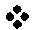 la détermination des transformations à effectuer par le filtre ;
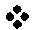 l'identification dans la mémoire source des séquences de données d'image initiale qui définissent ensemble la portion d'image initiale en déterminant une zone dans la forme modifiée de l'image qui sera représentée par des données produites en manipulant une certaine quantité de données d'image initiale qui n'est pas supérieure à la capacité de l'antémémoire ; et
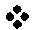 le contrôle du transfert des séquences de données comprenant la portion d'image initiale de la mémoire source vers l'antémémoire et du filtre vers la mémoire destination.

12. Procédé selon la revendication 11, dans lequel les données d'image initiale sont contenues dans une mémoire source et les données d'image transformée sont contenues dans une mémoire destination.

13. Procédé selon la revendication 11 ou 12, dans lequel chacune desdites séquences correspond au moins à une portion d'une ligne horizontale dans l'image.

14. Procédé selon l'une quelconque des revendications 11 à 13, dans lequel une représentation de l'image est affichée sur un moniteur et lesdits paramètres de transformation sont déterminés en réponse aux modifications effectuées à l'image affichée.

15. Procédé selon la revendication 14, dans lequel l'image affichée est mise à jour en continu à mesure que des modifications y sont effectuées, de façon à permettre à l'effet des modifications sur l'image affichée d'être observé sensiblement en temps réel.
